# EUROPEAN PATENT SPECIFICATION

(11) **EP 1 462 769 B1**
(45) Date of publication and mention of the grant of the patent: **21.05.2008**
(21) Application number: 04251777.1
(22) Date of filing: 26.03.2004
(51) Int. Cl.: G01D 3/08

(54) **Sensor with fault detection**
Sensor mit Schaltung zur Feststellung von Fehlern
Capteur avec circuit de détection d'erreurs

(30) Priority: 26.03.2003 US 397396
(43) Date of publication of application: 29.09.2004
(73) Proprietor: Hamilton Sundstrand Corporation, Windsor Locks, CT 06096-1010 (US)
(72) Inventor: Saloio, James, Ludlow Massachusetts 01056 (US)
(74) Representative: Leckey, David Herbert

(56) References cited:
- US-A- 6 025 711

## Description

The present invention relates to fault detection in a sensing system and is useful for example in an engine speed sensor and fault detector in an electronic engine control.

Electronic engine controls include a speed and/or position sensor to determine, for example, a rotary position and rotary engine speed. The sensor may be a magnetic pulse pickup sensor that generates a signal having a frequency that is proportional to the rotary speed of the device being monitored More particularly, the magnetic pickup sensor measures passing gear teeth and produces a sinusoidal waveform that is a function of the gear teeth rotation speed. The faster the gear teeth spin past the sensor, the larger the amplitude and the higher the frequency of the sinusoidal waveform generated by the sensor. A speed interface takes the sine wave and converts it to a square wave, and the speed interface also does a frequency conversion on the square wave so that a processor can determine the engine speed based on the square wave. In currently known systems, there is only one sensor input path.

Cable fatigue and other discontinuities may cause an open circuit condition at the sensor input, disconnecting one or both leads of the sensor from the processor or other circuitry used to analyze the sensor output. Currently-known engine control systems, however, are unable to detect a single-lead open sensor input condition because any capacitance in the cable will create a signal path, falsely indicating that the input path between the sensor and any circuit connected to the sensor still exists. This is particularly a problem if the processor and sensor are far apart and require a longer connection cable because longer cables have higher capacitances. If the engine speed is at the higher end of its operating range, this detection failure may cause improper control of the engine because the signal generated across the cable capacitance is unrelated to the actual operation of the engine and in some cases, may be out of phase with the actual engine operation by as much as 90 degrees. Further, delays in the fault detection may cause the engine control system to interpret the sensor signal improperly, making prompt fault detection important in some applications.

There is a desire for a magnet speed pickup system that can quickly and accurately detect a single- or dual-leaded open and/or short fault condition at a sensor interface input.

There is also a desire for a magnetic speed pickup system that can conduct fault detection without interrupting sensor operation and that can operate through the entire operational range of the sensor.

US-A-6025711 discloses a proximity sensor with a sensing coil connected in a feedback loop of an amplifier. One fault detecting technique comprises replacing the coil with a resistor using a switch, and checking the measured resistance. Another checks whether measured AC and DC resistances, or a synthesized value, are within a correct range.

The present invention is directed to a sensing system that includes a fault detection circuit for detecting an open and/or short circuit fault at a sensor input. The fault detection circuit comprises a current source that sends a bias current to the sensor, wherein the current source is driven by an offset voltage that maintains the bias current at a predetermined level; and a fault comparator that monitors the offset voltage to detect the occurrence of the fault condition.

In one embodiment, a sensor interface has two input paths, one carrying the sensor signal itself and the other carrying current from the fault detection circuit. The fault detection circuit includes a current source that maintains a nominal bias current through the sensor. The bias current is driven by an offset voltage and preferably travels along a closed loop formed by the sensor and is maintained at a predetermined level established by the closed loop system and the bias current. If an open or short input condition occurs at the sensor input, the offset voltage will rise to maintain the level of the bias current. When the offset voltage increases above a selected tripping threshold, a fault signal is output to a processor, indicating the occurrence of the fault. In one embodiment, the fault detection circuit remains functional through the full operational range of the sensor, including before the engine is started, so that the control system can detect sensor malfunctions even before engine start.

By incorporating a fault detection circuit that has the sensor in its feedback path, the system can quickly detect faults occurring at the input even if cable capacitance in the system generates a signal that would otherwise render the fault undetectable.

In one embodiment, the sensor is a magnetic speed pickup sensor, but the invention can be used with other sensor types as well.

Figure 1 is a block diagram illustrating a system incorporating a fault detection circuit according to one embodiment of the invention; and

Figure 2 is a schematic diagram of one embodiment of the system shown in Figure 1.

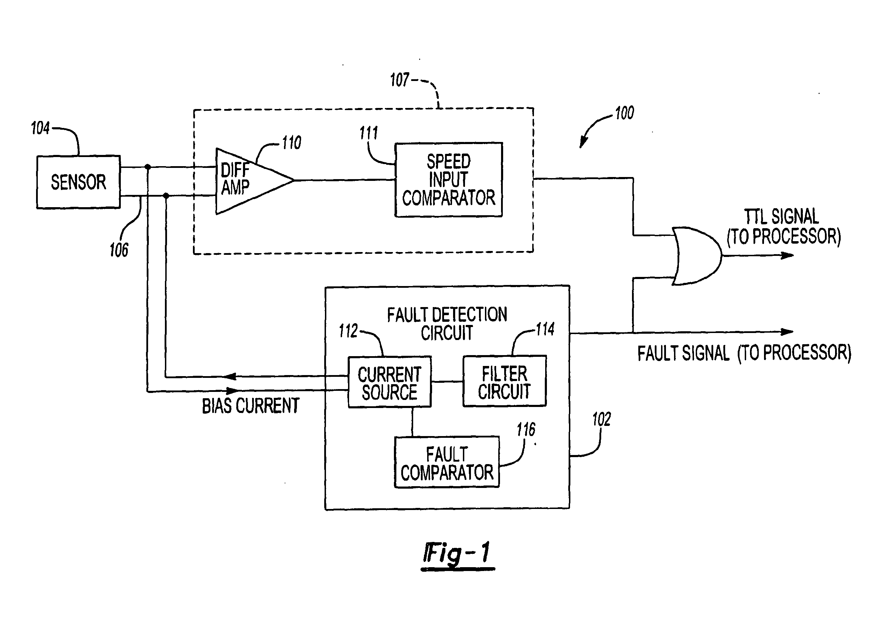

Figure 1 is a representative block diagram illustrating a sensing system 100 that includes a fault detection circuit 102 according to one embodiment of the invention.

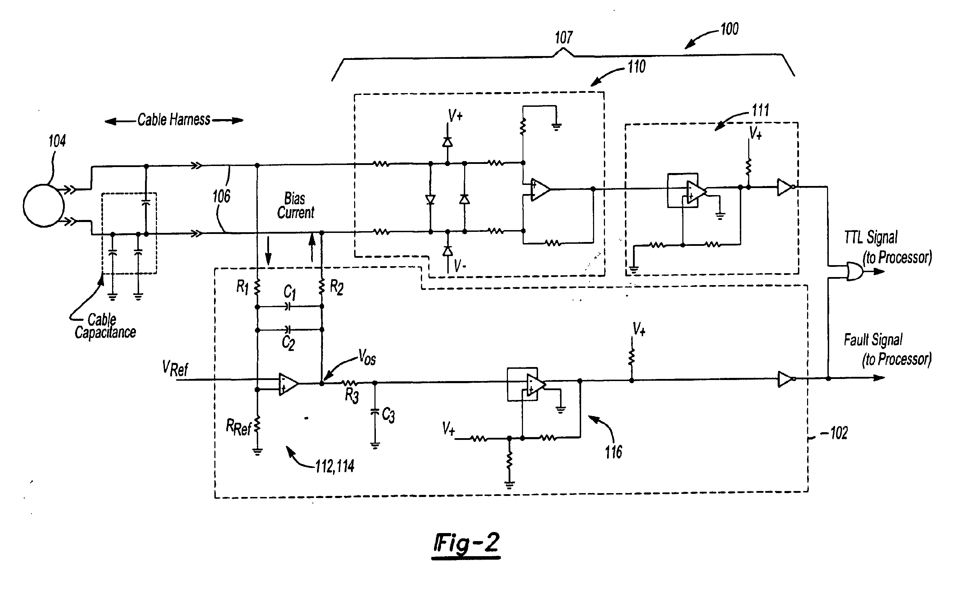

Figure 2 is a schematic illustrating the system 100 of Figure 1 in more detail. The system 100 shown in Figure 1 is an engine speed sensing system that senses faults at an input of a speed sensor 104, such as a magnetic pick-up speed sensor, but the inventive fault detection circuit 102 can be incorporated into alternative sensing systems where open/short faults may occur. Possible alternative sensors may include, but are not limited to, a thermocouple, pressure sensor, etc.

In this embodiment, the sensor 104 has two output leads 106 connected to an interface 107. The sensor output leads 106 carry a sensor signal to a differential amplifier 110 in the interface 107. In this example, the sensor 104 generates a sine wave as its output signal. The differential sine wave signal from the sensor 104 is converted by the differential amplifier 110 to a single-ended signal and then sent to a speed input comparator 111, which converts the sine wave to a logic square wave that can be used by a processor (not shown) to measure engine speed.

The resistance at the input of the differential amplifier 110 should be high compared to the resistance when the interface 107 is viewed in the direction of the sensor 104. The high input resistance of the differential amplifier 110 ensures that most of the nominal current from the fault detection circuit 102 travels through the sensor 104 and not into the differential amplifier 110. Note that in practice, however, some of the current from the fault detection circuit 102 may still leak into the differential amplifier 110 due to the differential amplifier's reference with respect to ground.

The fault detection circuit 102 uses a bias current to detect the presence of an open/short fault at the input leads 106. Referring to Figures 1 and 2, the fault detection circuit 102 includes a current source 112, a filter circuit 114, and a fault comparator 116. Although Figure 2 illustrates one possible way to implement these circuit functions, those of ordinary skill in the art will recognize alternative ways of carrying out the fault detection circuit 102 functions without departing from the scope of the invention.

In this embodiment, reference voltage V_{ref} and reference resistor R_{ref} together act to set a nominal bias current sent to the sensor by the current source 112. R1 and R2 isolate the current source and provide an input impedance for the fault detection circuit 102. The current source 112 is driven and maintained by an offset voltage V_{OS}, which varies as needed to keep the bias current output by the current source 112 at the nominal level set by the reference voltage V_{ref} and reference resistor R_{ref}. The current source 112 may be, for example, an integrating current source.

As can be seen in Figure 2, the current source 112 and the sensor 104 form a closed loop, with the bias current generated by the current source 112 being sent through a feedback path to the sensor 104. In other words, the sensor 104 is disposed in the feedback path of the current source 112. The offset voltage V_{OS} acts as a driving voltage to maintain the bias current to the sensor 104 at a selected level dictated by V_{ref}/R_{ref}. If an open or short fault condition occurs at the sensor input, then the offset voltage V_{OS} will increase to maintain the bias current level sent to the sensor 104.

The offset voltage V_{OS} is monitored by the fault comparator 116. The fault comparator 116 has a predetermined tripping threshold and generates a fault signal if the offset voltage V_{OS} exceeds the tripping threshold. In the illustrated embodiment, the offset voltage V_{OS} is set to be, for example, 4.6VDC during normal system operation. If an open or shorted condition occurs at the sensor 104 input, the offset voltage V_{OS} will rise to keep the bias current at a constant level, as noted above. If V_{OS} increases above the tripping threshold in the fault comparator 116, the fault comparator 116 asserts a fault signal to be high. The fault signal is then output from the fault detection circuit 102 to, for example, a processor or other circuit that monitors and/or controls operation of the sensor 104.

To prevent inadvertent tripping of the fault comparator 116 due to fluctuations in the output signal of the sensor 104, the filter circuit 114 may be included to attenuate the offset voltage V_{OS} and keep it below the tripping threshold during normal system operation. The sine wave output of the sensor 104 may exhibit large swings in its amplitude, potentially causing V_{OS} to fluctuate widely as well. Adding the filter circuit 114 keeps the fluctuations in the offset voltage V_{OS} from inadvertently tripping In the embodiment illustrated in Figure 2, resistors R1, R2, R3 and capacitors C1, C2, C3 act as the filter circuit 114. Thus, even though the offset voltage V_{OS} fluctuates due to changes in the sensor 104, the filter circuit 114 prevents the offset voltage V_{OS} from fluctuating high enough to cross the tripping threshold.

The fault comparator 116 may also be designed with hysteresis at the tripping threshold so that the fault detection circuit 102 will not reset itself (e.g., by resetting the fault signal back to a low condition) even if the offset voltage V_{OS} drops below the tripping threshold. To ensure that the fault signal accurately reflects the condition of the sensor inputs, the fault comparator 116 may set a resetting threshold that is lower than the tripping threshold. If the offset voltage V_{OS} drops past the tripping threshold to a level below the resetting threshold, the fault comparator 116 can be sure that the offset voltage V_{OS} drop actually reflects normal system operation rather than mere signal fluctuations in a system that still has an open or short fault at the sensor 104 input.

By sending a small bias current through the sensor 104 and monitoring a drive voltage used to maintain the bias current, the inventive system can detect the occurrence of an open and/or short fault condition at the sensor 102 input. Any faults in the bias current path will interrupt the bias current path and thereby raise the drive voltage, ensuring that the fault detection circuit 102 will promptly indicate the presence of the fault. As a result, the inventive system 100 allows proper control of any device relying on the sensor 104 output.

It should be understood that various alternatives to the embodiments of the invention described herein may be employed in practicing the invention. It is intended that the following claims define the scope of the invention and that the method and apparatus within the scope of these claims and their equivalents be covered thereby.

## Claims

1. A fault detection circuit (102) for detecting a fault at a sensor input, comprising:
a current source (112) that sends a bias current to the sensor (104), wherein the current source is driven by an offset voltage (Vos) that maintains the bias current at a predetermined level; and
a fault comparator (116) that monitors the offset voltage (V_{OS}) to detect the occurrence of the fault condition.

2. The fault detection circuit of claim 1, wherein the offset voltage (Vos) increases if a fault condition occurs, and wherein the fault comparator (116) generates a fault signal if the offset voltage (V_{OS}) exceeds a tripping threshold.

3. The fault detection circuit of claim 1 or 2, wherein the fault detection circuit (102) further comprises a filter circuit (114) that filters a sensor output to attenuate the offset voltage (V_{OS}) such that the offset voltage (V_{OS}) stays below the tripping threshold during a normal operating condition.

4. A sensing system, comprising:
a sensor (104) that generates a sensor output, wherein the sensor has at least one output lead (106); and
a fault detection circuit (102) as claimed in claim 1, 2 or 3 connected to the output lead (106).

5. The sensing system of claim 4, wherein the sensor (104) and the current source (112) form a closed loop.

6. The sensing system of claim 4 or 5, wherein the fault detection circuit (102) has a feedback path that includes the sensor (104).

7. The sensing system of claim 4, 5 or 6, further comprising an interface (110) in communication with the sensor (104), wherein the interface processes the sensor output for use by a processor.

8. The sensing system of claim 7, wherein the sensor output is a sine wave, and wherein the interface comprises a differential amplifier (110) that converts the sine wave to a single-ended signal.

9. The sensing system of claim 8, wherein the interface further comprises an input comparator (111) coupled to the differential amplifier (110).

10. The sensing system of claim 9, wherein the input comparator (111) converts the single-ended signal into a logic square wave.

11. The sensing system of claim 8, 9 or 10, wherein the differential amplifier (110) has an input resistance that is higher than a resistance between the fault detection circuit (102) and the sensor (104).

12. A method of detecting a fault condition in a sensor (104), comprising:
generating a bias current having a selected level, wherein the bias current is maintained by an offset voltage (V_{OS});
sending the bias current through the sensor (104),
comparing the offset voltage (V_{OS}) to a tripping threshold, wherein a fault condition limits flow of the bias current through the sensor (104) and causes the offset voltage (V_{OS}) to rise to maintain the bias current; and
generating a fault signal if the offset voltage exceeds the tripping threshold.

13. The method of claim 12, wherein the offset voltage (V_{OS}) is influenced by a sensor output, and wherein the method further comprises filtering the sensor output to maintain the offset voltage (V_{OS}) below the tripping threshold during normal sensor operation.

14. The method of claim 12 or 13, wherein the step of generating a fault signal comprises setting the fault signal at a high level if the offset voltage (V_{OS}) exceeds the tripping threshold.

## Patentansprüche

1. Fehlererkennungsschaltung (102) zum Erkennen eines Fehlers an einem Sensoreingang, aufweisend:
eine Stromquelle (112), die einen Vorspannstrom zu dem Sensor (104) schickt, wobei die Stromquelle mit einer Offset-Spannung (Vos) angesteuert wird, die den Vorspannstrom auf einem vorbestimmten Niveau hält; und
einen Fehlerkomparator (116), der die Offset-Spannung (Vₒₛ) überwacht, um das Auftreten eines Fehlerzustands zu detektieren.

2. Fehlererkennungsschaltung nach Anspruch 1,
wobei die Offset-Spannung (Vₒₛ) bei Auftreten eines Fehlerzustands ansteigt, und wobei der Fehlerkomparator (115) ein Fehlersignal generiert, wenn die Offset-Spannung (Vos) einen Auslöse-Schwellenwert übersteigt.

3. Fehlererkennungsschaltung nach Anspruch 1 oder 2,
wobei die Fehlererkennungsschaltung (102) ferner eine Filterschaltung (114) aufweist, die ein Sensorausgangssignal zum Dämpfen der Offset-Spannung (Vos) filtert, so dass die Offset-Spannung (Vos) während eines normalen Betriebszustands unter dem Auslöse-Schwellenwert bleibt.

4. Abtastsystem, aufweisend:
einen Sensor (104), der ein Sensorausgangssignal erzeugt, wobei der Sensor wenigstens eine Ausgangsleitung (106) aufweist; und
eine Fehlererkennungsschaltung (102) gemäß Anspruch 1, 2 oder 3, die mit der Ausgangsleitung (106) verbunden ist.

5. Abtastsystem nach Anspruch 4,
wobei der Sensor (104) und die Stromquelle (112) einen geschlossenen Regelkreis bilden.

6. Abtastsystem nach Anspruch 4 oder 5,
wobei die Fehlererkennungsschaltung (102) einen Rückkopplungsweg aufweist, der den Sensor (104) beinhaltet.

7. Abtastsystem nach Anspruch 4, 5 oder 6,
weiterhin aufweisend eine Schnittstelle (110) in Verbindung mit dem Sensor (104), wobei die Schnittstelle das Sensorausgangssignal für die Verwendung durch einen Prozessor verarbeitet.

8. Abtastsystem nach Anspruch 7,
wobei das Sensorausgangssignal eine Sinuswelle ist und wobei die Schnittstelle einen Differenzverstärker (110) aufweist, der die Sinuswelle in ein asymmetrisches Signal umwandelt.

9. Abtastsystem nach Anspruch 8,
wobei die Schnittstelle ferner einen Eingangskomparator (111) aufweist, der mit dem Differenzverstärker (110) gekoppelt ist.

10. Abtastsystem nach Anspruch 9,
wobei der Eingangskomparator (111) das asymmetrische Signal in eine logische Rechteckwelle umwandelt.

11. Abtastsystem nach Anspruch 8, 9 oder 10,
wobei der Differenzverstärker (110) einen Eingangswiderstand aufweist, der höher ist als ein Widerstand zwischen der Fehlererkennungsschaltung (102) und dem Sensor (104).

12. Verfahren zum Feststellen eines Fehlerzustands bei einem Sensor (104),
wobei das Verfahren folgende Schritte aufweist:
Erzeugen eines Vorspannstroms mit einem ausgewählen Niveau, wobei der Vorspannstrom durch eine Offset-Spannung (Vₒₛ) aufrecht erhalten wird;
Schicken des Vorspannstroms durch den Sensor (104);
Vergleichen der Offset-Spannung (Vₒₛ) mit einem Auslöse-Schwellenwert, wobei ein Fehlerzustand den Fluss des Vorspannstroms durch den Sensor (104) begrenzt und ein Ansteigen der Offset-Spannung (Vₒₛ) verursacht, um den Vorspannstrom aufrecht zu erhalten; und
Generieren eines Fehlersignals, wenn die Offset-Spannung den Auslöse-Schwellenwert übersteigt.

13. Verfahren nach Anspruch 12,
wobei die Offset-Spannung (Vₒₛ) durch ein Sensorausgangssignal beeinflusst wird, und wobei das Verfahren ferner das Filtern des Sensorausgangssignals beinhaltet, um die Offset-Spannung (Vos) während des normalen Sensorbetriebs unter dem Auslöse-Schwellenwert zu halten.

14. Verfahren nach Anspruch 12 oder 13,
wobei der Schritt des Generierens eines Fehlersignals das Setzen des Fehlersignals auf ein hohes Niveau beinhaltet, wenn die Offset-Spannung (Vos) den Auslöse-Schwellenwert übersteigt.

## Revendications

1. Circuit de détection d'erreurs (102) pour détecter une erreur au niveau de l'entrée d'un capteur, comprenant :
une source de courant (112) qui envoie un courant de polarisation vers le capteur (104), dans lequel la source de courant est excitée par une tension de décalage (Vos) qui maintient le courant de polarisation à un niveau prédéterminé ; et
un comparateur d'erreurs (116) qui surveille la tension de décalage (Vos) dans le but de détecter la survenue de la condition d'erreur.

2. Circuit de détection d'erreurs selon la revendication 1, dans lequel la tension de décalage (Vos) augmente si une condition d'erreur se réalise, et dans lequel le comparateur d'erreurs (116) génère un signal d'erreur si la tension de décalage (Vos) dépasse un seuil de déclenchement.

3. Circuit de détection d'erreurs selon la revendication 1 ou 2, dans lequel le circuit de détection d'erreurs (102) comprend par ailleurs un circuit de filtrage (114) qui filtre une sortie du capteur dans le but d'atténuer la tension de décalage (Vos), de façon à ce que la tension de décalage (Vos) se maintienne en dessous du seuil de déclenchement durant une condition de fonctionnement normal.

4. Système de détection, comprenant :
un capteur (104) qui génère une sortie de capteur, dans lequel le capteur a au moins un fil de sortie (106) ; et
un circuit de détection d'erreurs (102) selon la revendication 1, 2 ou 3, qui est connecté au fil de sortie (106).

5. Système de détection selon la revendication 4, dans lequel le capteur (104) et la source de courant (112) forment une boucle fermée.

6. Système de détection selon la revendication 4 ou 5, dans lequel le circuit de détection d'erreurs (102) possède un trajet de retour d'information qui comprend le capteur (104).

7. Système de détection selon la revendication 4, 5 ou 6, comprenant par ailleurs une interface (110) en communication avec le capteur (104), dans lequel l'interface traite la sortie du capteur de façon à ce qu'elle puisse être utilisée par un processeur.

8. Système de détection selon la revendication 7, dans lequel la sortie du capteur est une onde sinusoïdale, et dans lequel l'interface comprend un amplificateur différentiel (110) qui convertit l'onde sinusoïdale en un signal à une seule sortie.

9. Système de détection selon la revendication 8, dans lequel l'interface comprend par ailleurs un comparateur d'entrée (111) couplé à l'amplificateur différentiel (110).

10. Système de détection selon la revendication 9, dans lequel le comparateur d'entrée (111) convertit le signal asymétrique en une onde carrée logique.

11. Système de détection selon la revendication 8, 9 ou 10, dans lequel l'amplificateur différentiel (110) a une résistance d'entrée qui est plus élevée qu'une résistance entre le circuit de détection d'erreurs (102) et le capteur (104).

12. Procédé de détection d'une condition d'erreur dans un capteur (104), comprenant les étapes consistant à :
générer un courant de polarisation ayant un niveau sélectionné, dans lequel le courant de polarisation est maintenu par une tension de décalage (Vos) ;
détecter le courant de polarisation à travers le capteur (104) ;
comparer la tension de décalage (Vos) à un seuil de déclenchement, dans lequel une condition d'erreur limite la circulation du courant de polarisation à travers le capteur (104) et amène la tension de décalage (Vos) à augmenter de façon à maintenir le courant de polarisation ; et
générer un signal d'erreur si la tension de décalage dépasse le seuil de déclenchement.

13. Procédé selon la revendication 12, dans lequel la tension de décalage (Vos) est influencée par la sortie d'un capteur, et dans lequel le procédé comprend par ailleurs une étape consistant à filtrer la sortie du capteur de façon à maintenir la tension de décalage (Vos) en dessous du seuil de déclenchement durant un fonctionnement normal du capteur.

14. Procédé selon la revendication 12 ou 13, dans lequel l'étape de génération d'un signal d'erreur comprend une étape consistant à paramétrer le signal d'erreur à un niveau élevé si la tension de décalage (Vos) dépasse le seuil de déclenchement.
